(19) **Europäisches Patentamt**
**European Patent Office**
**Office européen des brevets**

(11) **EP 1 431 547 B1**

(12) **EUROPÄISCHE PATENTSCHRIFT**

(45) Veröffentlichungstag und Bekanntmachung des Hinweises auf die Patenterteilung:
**07.10.2009 Patentblatt 2009/41**

(51) Int Cl.:
*F02D 35/00* (2006.01)     *F02M 25/07* (2006.01)

(21) Anmeldenummer: **03028160.4**

(22) Anmeldetag: **08.12.2003**

(54) **Verfahren und Vorrichtung zur Bestimmung des Abgasrückführmassenstroms eines Verbrennungsmotors**

Method and device for calculating the exhaust gas recirculation amount in an internal combustion engine

Procédé et dispositif pour déterminer le débit du gaz d'échappement recirculé dans un moteur à combustion interne

(84) Benannte Vertragsstaaten:
**AT BE BG CH CY CZ DE DK EE ES FI FR GB GR HU IE IT LI LU MC NL PT RO SE SI SK TR**

(30) Priorität: **20.12.2002 DE 10260322**

(43) Veröffentlichungstag der Anmeldung:
**23.06.2004 Patentblatt 2004/26**

(73) Patentinhaber: **Volkswagen AG**
**38436 Wolfsburg (DE)**

(72) Erfinder:
• **Lange, Thorsten, Dr.**
**38118 Braunschweig (DE)**
• **Veldten, Burkhard**
**31234 Edemissen (DE)**

(74) Vertreter: **Banzer, Hans-Jörg et al**
**Kraus & Weisert**
**Patent- und Rechtsanwälte**
**Thomas-Wimmer-Ring 15**
**80539 München (DE)**

(56) Entgegenhaltungen:
**WO-A-20/04003364     DE-A1- 19 920 498**
**DE-A1- 19 950 146**

• **PATENT ABSTRACTS OF JAPAN Bd. 1995, Nr. 02, 31. März 1995 (1995-03-31) -& JP 06 330821 A (FUJI HEAVY IND LTD), 29. November 1994 (1994-11-29)**

**Beschreibung**

Die vorliegende Erfindung betrifft ein Verfahren sowie eine Vorrichtung zur Bestimmung des Abgasrückführmassenstroms eines Verbrennungsmotors, beispielsweise eines Dieselmotors. Insbesondere betrifft die vorliegende Erfindung ein derartiges Verfahren und eine derartige Vorrichtung, wobei mit Hilfe der somit gewonnenen Information über den Abgasrückführmassenstrom die Abgasrückführrate korrekt bestimmt werden kann.

Für eine insbesondere emissionsoptimale Regelung eines Verbrennungsmotors, z. B. eines aufgeladenen Dieselmotors, ist die genaue Kenntnis einer möglichst großen Anzahl von Betriebsparametern des Motorsystems von entscheidender Bedeutung. Ein derartiger Betriebsparameter ist bei einem Verbrennungsmotor mit Abgasrückführung beispielsweise der Abgasrückführmassenstrom, d. h. der Massenstrom des von dem Verbrennungsmotor ausgestoßenen Abgases, welches über eine Abgasrückführleitung einer Mischstelle zugeführt wird, wo das Abgas mit angesaugter Frischluft gemischt wird, um das daraus resultierende Frischluft/Abgasgemisch den Brennräumen des Verbrennungsmotors zuzuführen. Auch die so genannte Abgasrückführrate, d.h. der Quotient aus dem angesaugten Frischluftmassenstrom und dem Abgasrückführmassenstrom, ist für die Einhaltung von Abgasbestimmungen wichtig.

Derzeit ist der Abgasrückführmassenstrom nur mit teuren oder kurzlebigen Sensoren messbar. Empirisch oder physikalisch basierte Modelle, mit denen der Abgasrückführmassenstrom aus anderen Betriebsparametern des Motorsystems abgeleitet werden kann, weisen eine unzureichende Genauigkeit auf.

Auch die Bestimmung der Abgasrückführrate ist bei herkömmlicher Vorgehensweise stark fehlerbehaftet.

Implizit wird zu ihrer Bestimmung durch Prüfstandsmessungen zunächst aus verschiedenen Betriebsparametern der in den jeweiligen Zylinder oder Brennraum des Verbrennungsmotors angesaugte Gesamt- oder Zylindermassenstrom $dm_{zyl}$ bestimmt. Hierzu kommen als Betriebsparameter insbesondere der Druck und die Temperatur in der Verbindung (dem so genannten Saugrohr) zwischen der zuvor genannten Mischstelle und dem Zylinder sowie die Einspritzmenge des Luft/Kraftstoffgemisches und die Motordrehzahl in Frage, wobei durch die Prüfstandsmessungen der Zylindermassenstrom, welcher im Prinzip der Summe aus dem Frischluftmassenstrom $dm_{HFM}$ und dem Abgasrückführmassenstrom $dm_{AGR}$ entspricht, abhängig von diesen Betriebsparametern in Form eines Kennfelds ermittelt wird, d.h. es ist somit bekannt, bei welchen Betriebsparameterwerten welcher Zylindermassenstrom auftritt. Der angesaugte Frischluftmassenstrom wird mit Hilfe eines Luftmassensensors, beispielsweise eines Heißfilm-Luftmassensensors, im Ansaugtrakt gemessen. Der Abgasrückführmassenstrom $dm_{AGR}$ ergibt sich aus dem Zylindermassenstrom $dm_{zyl}$ und dem im laufenden Betrieb gemessenen Frischluftmassenstrom $dm_{HFM}$ als Differenz:

$$(1) \qquad dm_{AGR} = dm_{zyl} - dm_{HFM}$$

Die gesuchte Abgasrückführrate $r_{AGR}$ folgt dann durch Quotientenbildung:

$$(2) \qquad r_{AGR} = dm_{AGR}/dm_{HFM}$$

Nur der Vollständigkeit halber sei darauf hingewiesen, dass die tatsächliche Implementierung zwar etwas von dem zuvor beschriebenen Verfahren abweichen kann, sich jedoch grundsätzlich auf diesen Algorithmus zurückführen lässt.

Ein Verfahren zur Bestimmung des Abgasrückführmassenstroms nach dem Oberbegriff des Anspruchs 1 und eine entsprechende Vorrichtung nach dem Oberbegriff des Anspruches 7 sind aus DE 199 20 498 A1 bekannt.

Das zuvor beschriebene Verfahren reagiert empfindlich auf Toleranzen der Messsignale und fertigungsbedingte Toleranzen des Einlassbereichs. Eine Differenz der absoluten Fehler der beiden bestimmten Massenströme $dm_{HFM}$ und $dm_{zyl}$ geht direkt in den Abgasrückführmassenstrom $dm_{AGR}$ ein, der als relativ kleine Differenz zweier relativ großer Größen und daher mit hoher Empfindlichkeit bestimmt wird, wobei sich beispielsweise der Fehler bei der Erfassung des Zylindermassenstroms $dm_{zyl}$ im Wesentlichen aus Herstellungstoleranzen der Ladeluftstrecke und Messfehlern des Ladedruck- und Ladetemperatursensors zusammensetzt, während der Fehler bei der Erfassung des Frischluftmassenstroms $dm_{HFM}$ im Wesentlichen auf Messfehler des Luftmassensensors zurückgeht. Ein Fehler von -5% bei der Bestimmung des Zylindermassenstroms $dm_{zyl}$ und ein Fehler von +5% bei der Bestimmung des Frischluftmassenstroms dmHFM liefern fehlerhaft einen zusätzlichen Abgasrückführmassenstrom $dm_{AGR}$ von 10% des Frischluftmassenstroms.

Damit wird nicht nur der Abgasrückführmassenstrom $dm_{AGR}$, sondern auch die Abgasrückführrate $r_{AGR}$ fehlerbehaftet bestimmt, und zukünftige strengere Abgasbestimmungen können unter Umständen nicht eingehalten werden.

Der vorliegenden Erfindung liegt daher die Aufgabe zugrunde, ein Verfahren sowie eine entsprechend ausgestaltete Vorrichtung zur Bestimmung des Abgasrückführmassenstroms eines Verbrennungsmotors bereitzustellen, womit eine möglichst genaue Bestimmung des Abgasrückführmassenstroms und insbesondere eine möglichst genaue Bestimmung der Abgasrückführrate möglich ist.

Diese Aufgabe wird erfindungsgemäß durch ein Verfahren mit den Merkmalen des Anspruches 1 bzw. eine Vorrichtung mit den Merkmalen des Anspruches 7 gelöst. Die Unteransprüche definieren jeweils bevorzugte und vorteilhafte Ausführungsformen der vorliegenden Erfindung.

Zur Bestimmung des Abgasrückführmassenstroms wird erfindungsgemäß wie bei der zuvor beschriebenen herkömmlichen Vorgehensweise der Frischluftmassenstrom gemessen, um davon abhängig unter Auswertung des Zylindermassenstroms, welcher den Abgasrückführmassenstrom und den Frischluftmassenstrom umfasst, den Abgasrückführmassenstrom im laufenden Betrieb des Verbrennungsmotors zu ermitteln. Dabei wird jedoch im laufenden Betrieb eine den Zylindermassenstrom in Abhängigkeit von verschiedenen Betriebsparametern des Verbrennungsmotors beschreibende Kennlinie, welche z.B. vor Inbetriebnahme des Verbrennungsmotors durch Prüfstandsmessungen ermittelt worden ist, so an den für verschiedene Betriebspunkte des Verbrennungsmotors gemessenen und somit bekannten Frischluftmassenstrom angepasst, d.h. adaptiert, dass die obige Gleichung (1) den bis auf einen prozentualen Fehler des zum Messen des Frischluftmassenstroms eingesetzten Luftmassenmessers richtigen Abgasrückführmassenstrom in den entsprechenden Betriebspunkten liefert. Im Prinzip kann auch auf die vorhergehenden Prüfstandsmessungen verzichtet werden. Die Startwerte für die Kennlinie sind beliebig und beeinflussen lediglich die Dauer der Adaption.

Die Kennlinie des Zylindermassenstraus wird dabei durch ein Modell mit Koeffizienten modelliert und durch Adaption der Koeffizienten des Modells im laufenden Betrieb adaptiert.

Mit Hilfe dieser adaptierten Kennlinie des Zylindermassenstroms und des jeweils gemessenen Frischluftmassenstroms kann dann zuverlässig der Abgasrückführmassenstrom bestimmt werden, wobei im Gegensatz zu dem eingangs beschriebenen Stand der Technik Fehler des Ladelufttemperatursensors, des Ladedrucksensors oder Fertigungstoleranzen der Ladeluftstrecke im Betrieb des jeweiligen Fahrzeugs automatisch herauskalibriert werden und somit in keinen der bestimmten Gasmassenströme mehr eingehen. Zudem kann auf einen Fahrerwunsch rascher reagiert werden, da eine sehr schnelle Anpassung der erforderlichen Betriebsparameter des Verbrennungsmotors möglich ist, d.h. die vorliegende Erfindung ermöglicht nicht nur eine erhöhte statische Zuverlässigkeit, sondern auch einen verbesserten dynamischen Betrieb.

Da die Kennlinie des Zylindermassenstroms derart abgeglichen wird, dass der prozentuale Fehler des Zylindermassenstroms und des Frischluftmassenstroms gleich groß ist, weist auch der Abgasrückführmassenstrom den gleichen prozentualen Fehler auf. Bei der Quotientenbildung zur Bestimmung der Abgasrückführrate wird dieser prozentuale Fehler herausgekürzt und somit eliminiert, so dass die Abgasrückführrate erfindungsgemäß im Prinzip fehlerfrei bestimmt werden kann.

Die vorliegende Erfindung wird nachfolgend näher anhand der beigefügten Zeichnung unter Bezugnahme auf ein bevorzugtes Ausführungsbeispiel erläutert.

Die einzige Figur zeigt eine vereinfachte Darstellung eines Simulationsmodells zur Simulierung des Gasstroms in einem Kraftfahrzeug bzw. einem entsprechenden Verbrennungsmotor gemäß der vorliegenden Erfindung.

In der Figur ist ein Verbrennungsmotor 1 mit vier Brennräumen bzw. Zylindern dargestellt. Der Verbrennungsmotor 1 ist mit einem Abgasturbolader (ATL) gekoppelt, welcher eine Turbine 2 und einen Verdichter 7 umfasst, wobei die Turbine 2 und der Verdichter 7 auf einer gemeinsamen Welle 14, der so genannten Turboladerwelle, angebracht sind. Die Turbine 2 nutzt die im Abgas des Verbrennungsmotors 1 enthaltene Energie zum Antrieb des Verdichters 7, welcher über einen Ansaugtrakt Frischluft ansaugt und vorverdichtete Luft in die einzelnen Brennräume des Verbrennungsmotors 1 drückt. Der angesaugte Frischluftmassenstrom wird von einem relativ weit vorne im Ansaugtrakt angeordneten Luftmassenmesser 6 gemessen und somit im Betrieb des Verbrennungsmotors 1 bzw. des Kraftfahrzeugs erfasst. Der durch die Turbine 2, den Verdichter 7 und die Turboladerwelle 14 gebildete Abgasturbolader ist nur durch den Luft- und Abgasmassenstrom strömungstechnisch mit dem Verbrennungsmotor 1 gekoppelt.

Die von dem Verdichter 7 angesaugte und vorverdichtete Frischluft wird über einen Ladeluftkühler (LLK) 8, welcher die Abgastemperatur und damit die $NO_x$-Emission sowie den Kraftstoffverbrauch reduziert, einem so genannten Ersatzvolumen (ERS) 9 zugeführt. Durch die Reduktion der Abgastemperatur in dem Ladeluftkühler 8 wird die Luft durch Anreicherung von Sauerstoff verdichtet, ohne jedoch den Druck zu erhöhen. Den einzelnen Brennräumen des Verbrennungsmotors 1 ist ein Einlass-Sammler (ELS) 10 vorgeschaltet. Das in den Brennräumen des Verbrennungsmotors 1 erzeugte Abgas wird von einem Abgas-Sammler (ASA) 11 gesammelt und der Turbine 2 zugeführt. Der Turbine 2 ist in Abgasströmungsrichtung die Abgasanlage (APU) 12 des Kraftfahrzeugs nachgeschaltet, welche die Schadstoffanteile der beim Betrieb des Verbrennungsmotors 1 entstehenden Abgase abbaut und die verbleibenden Abgase so geräuscharm wie möglich ableitet. Ein Teil des in den Brennräumen des Verbrennungsmotors 1 erzeugten Abgases wird von dem Abgas-Sammler 11 über eine Abgasrückführung (AGR) 16 mit einem Abgasrückführventil 17 an den Einlass-Sammler 10 zurückgeführt, wo das zurückgeführte Abgas mit der angesaugten Frischluft gemischt und das Frischluft/Abgasgemisch dem entsprechenden Zylinder des Verbrennungsmotors 1 zugeführt wird.

Des Weiteren ist ein Steuergerät 4 dargestellt, welches ein Bestandteil eines entsprechenden Motormanagementsystems des Kraftfahrzeugs ist. Von dem Steuergerät 4 werden verschiedene Größen oder Betriebsparameter des dargestellten Motorsystems überwacht, welche mit Hilfe entsprechender Sensoren erfasst und über eine Schnittstelle 3 dem Steuergerät 4 zugeführt werden. Dabei kann es sich insbesondere um den von dem Luftmassenmesser 6 gemessenen Frischluftmassenstrom, die Motordrehzahl, die Dichte des Frischluft/Abgasgemisches in der Verbindung zwischen dem Einlass-Sammler 10 und dem Verbrennungsmotor 1, dem so genannten Saugrohr, etc. handeln. Die auf diese Weise von dem Steuergerät 4 erfassten Messgrößen werden ausgewertet, um davon abhängig verschiedene Stellsignale für das Motormanagementsystem zu erzeugen. Wie in der Figur angedeutet ist, können die über die Schnittstelle 3 von dem Steuergerät 4 ausgegebenen Steuersignale beispielsweise das Tastverhältnis des in der Abgasrückführung angeordneten Abgasrückführventils 17, die Leitschaufelverstellung 15 der Turbine 2 oder auch den Einspritzzeitpunkt sowie die Einspritzmenge des in die einzelnen Brennräume des Verbrennungsmotors 1 über ein Einspritzsystem 5 eingespritzten Luftkraftstoffgemisches etc. steuern.

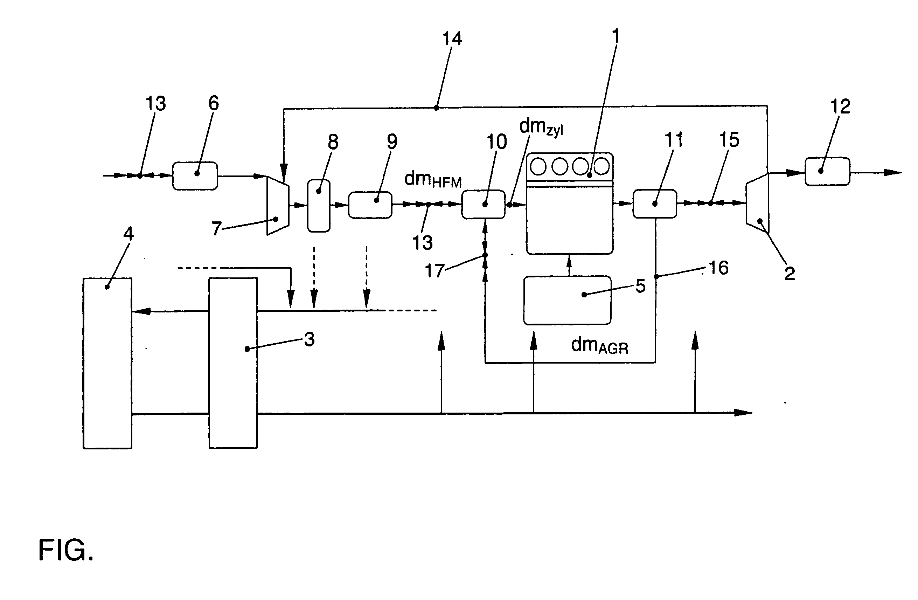

Mit den Bezugzeichen 13 sind in Figur 1 in entsprechenden Luft- bzw. Gaspfaden angeordnete Ventile bezeichnet.

Vor Inbetriebnahme des Verbrennungsmotors 1 wird durch Prüfstandsmessungen ein Kennfeld bzw. eine Kennlinie des Zylindermassenstroms $dm_{zyl}$, d.h. des Massenstroms des von dem Einlass-Sammler 10, welcher die Mischstelle für die Frischluft und das zurückgeführte Abgas aufweist, den einzelnen Zylindern des Verbrennungsmotors über die als Saugrohr bezeichnete Verbindungsleitung zugeführten Frischtuft/Abgasgemisches, in Abhängigkeit von verschiedenen Betriebsparametern des Verbrennungsmotors ermittelt. Wie eingangs beschrieben worden ist, hängt der Zylindermassenstrom $dm_{zyl}$ bekannterweise unter anderem von dem Saugrohrdruck, der Saugrohrtemperatur, der Dichte im Saugrohr und der Motordrehzahl ab. Der Zylindermassenstrom $dm_{zyl}$ kann somit wie folgt modelliert werden:

$$(3) \qquad dm_{zyl} = f(p_0,\ p_1,\ p_2, \ldots, a_0,\ a_1,\ a_2,\ \ldots)$$

Dabei bezeichnen $p_0$, $p_1$, $p_2$ verschiedene Messwerte oder Betriebsparameter, welche in das Modell eingehen, während $a_0$, $a_1$, $a_2$ Koeffizienten, welche das Modell beschreiben, bezeichnen. Der physikalische Zusammenhang der einzelnen Betriebsparameter und Koeffizienten muss nicht notwendigerweise als Gleichung bekannt sein. Es genügt auch lediglich das Vorhandensein einer in ein Polynom abbildbaren Kennlinie bzw. eines Kennfelds oder Kennraums.

Im laufenden Betrieb des Verbrennungsmotors 1 bzw. des entsprechenden Kraftfahrzeugs wird kontinuierlich der Frischluftmassenstrom $dm_{HFM}$ von dem Luftmassenmesser 6 gemessen und dem Steuergerät 4 zugeführt. In dem Steuergerät 4 ist die zuvor beschriebene Kennlinie des Zylindermassenstroms $dm_{zyl}$ gespeichert, so dass diese Kennlinie dem Steuergerät 4 bekannt ist.

Das Steuergerät adaptiert diese Kennlinie im laufenden Betrieb derart, dass in jedem Betriebspunkt des Verbrennungsmotors 1 bei bekannten Werten des Abgasrückführmassenstroms $dm_{AGR}$ die obige Gleichung erfüllt ist.

So kann beispielsweise der Frischluftmassenstrom $dm_{HFH}$ stets dann gemessen werden, wenn das in der Abgasrückführung 16 enthaltene Abgasrückführventil 17 geschlossen ist, so dass gilt: $dm_{AGR} = 0$. In diesem Fall adaptiert das Steuergerät 4 die Kennlinie des Zylindermassenstroms $dm_{zyl}$ derart, dass für jeden Betriebspunkt des Verbrennungsmotors 1 möglichst gilt:

$$(4) \qquad 0 = dm_{zyl} - dm_{HFM},\ \text{d.h.}\ dm_{zyl} = dm_{HFM}$$

Der Zusammenhang gemäß Gleichung (4) wird wie beschrieben angestrebt. Infolge zufälliger Fehler ist dies jedoch unter Umständen nicht erreichbar, zumindest nicht für alle Messungen im überbestimmten Fall, so dass daher ein statistisches Verfahren, z.B. die Methode der kleinsten Quadrate, zum Einsatz kommen kann, um die Standardabweichung der rechten von der linken Gleichungsseite der Gleichung (4) zu minimieren.

Der Abgleich der Kennlinie des Zylindermassenstroms kann jedoch auch bei geöffnetem Abgasrückführventil 17 erfolgen, da beispielsweise auch Verfahren bekannt sind, aus bestimmten gemessenen Betriebsparametern des Verbrennungsmotors 1 den augenblicklichen Wert des Abgasrückführmassenstroms $dm_{AGR}$ zu bestimmen. Wichtig für den zuvor beschriebenen Abgleich der Kennlinie des Zylindermassenstroms $dm_{zyl}$ ist im Prinzip lediglich, dass möglichst zuverlässige oder abgeschätzte Informationen über den in dem jeweiligen Betriebspunkt gültigen Wert des Abgasrückführmassenstroms $dm_{AGR}$ unabhängig von den zuvor beschriebenen, möglicherweise fehlerbehafteten Sensoren, insbesondere unabhängig von dem Luftmassenmesser 6, bekannt sind. Zumindest sollte der Grad der Unzuverlässigkeit der verwendeten Informationen bekannt sein.

Der Abgleich der Kennlinie des Zylindermassenstroms $dm_{zyl}$ kann beispielsweise durch entsprechende Adaption der Koeffizienten $a_0$, $a_1$, $a_2$ ... des Modells gemäß Gleichung (3) im laufenden Betrieb erfolgen.

Bei Abgleich der Kennlinie für den Zylindermassenstrom $dm_{zyl}$ liefert die obige Gleichung (1) unter Verwendung

**EP 1 431 547 B1**

dieser abgeglichenen bzw. adaptierten Kennlinie für alle Betriebsbedingungen, insbesondere für relativ kleine Abgasrückführraten, den bis auf einen möglicherweise vorhandenen prozentualen Fehler des Heißfilm-Luftmassenmessers 6 korrigierten Massenstrom durch das Einlassventil. Ein zusätzlicher Fehler durch die Differenzbildung gemäß Gleichung (1) tritt nicht mehr auf, so dass auch der Abgasrückführmassenstrom $dm_{AGR}$ in jedem Betriebspunkt lediglich den prozentualen Fehler des Heißfilm-Luftmassenmessers 6 aufweist. Fehler eines Ladelufttemperatursensors, eines Ladedrucksensors oder Fertigungstoleranzen der Ladeluftstrecke, welche wie beschrieben herkömmlicherweise zu Fehlern bei der Bestimmung des Zylindermassenstroms $dm_{zyl}$ führen können, werden durch das obige Abgleichverfahren automatisch im Betrieb des Kraftfahrzeugs durch das Steuergerät 4 eliminiert bzw. herauskalibriert und gehen in keinen der bestimmten Massenströme mehr ein, solange die Anzeige der beteiligten Sensoren eindeutig bleibt.

Besonders vorteilhaft ist das zuvor beschriebene Abgleichverfahren auch in Hinblick auf die Bestimmung der Abgasrückführrate $r_{AGR}$ gemäß Gleichung (2). Da die Kennlinie des Zylindermassenstroms $dm_{zyl}$ wie beschrieben gerade so abgeglichen wird, dass die prozentualen Fehler des Zylindermassenstroms $dm_{zyl}$ und des Frischluftmassenstroms $dm_{HFM}$ gleich groß sind, weist auch der gemäß Gleichung (1) daraus ableitbare Abgasrückführmassenstrom $dm_{AGR}$ den gleichen prozentualen Fehler auf. Bei der Quotientenbildung gemäß Gleichung (2) zur Bestimmung der Abgasrückführrate $r_{AGR}$ kürzt sich dieser prozentuale Fehler heraus und wird somit eliminiert, d.h. die Abgasrückführrate $r_{AGR}$ kann im Prinzip fehlerfrei bestimmt werden.

**BEZUGSZEICHENLISTE**

| | |
|---|---|
| 1 | Verbrennungsmotor |
| 2 | Turbine |
| 3 | Schnittstelle |
| 4 | Steuergerät |
| 5 | Einspritzsystem |
| 6 | Heißfilm-Luftmassenmesser |
| 7 | Verdichter |
| 8 | Ladeluftkühler |
| 9 | Ersatzvolumen |
| 10 | Einlass-Sammler |
| 11 | Auslass-Sammler |
| 12 | Abgasanlage |
| 13 | Ventil |
| 14 | Turboladerwelle |
| 15 | Leitschaufelverstellung der Turbine |
| 16 | Abgasrückführleitung |
| 17 | Abgasrückführventil |
| $dm_{AGR}$ | Abgasrückführmassenstrom |
| $dm_{HFM}$ | Frischluftmassenstrom |
| $dm_{zyl}$ | Zylindermassenstrom |

**Patentansprüche**

1. Verfahren zur Bestimmung des Abgasrückführmassenstroms eines Verbrennungsmotors, wobei Frischluft mit über eine Abgasrückführung (16) zurückgeführtem Abgas des Verbrennungsmotors (1) gemischt und das daraus resultierende Gasgemisch mindestens einem Zylinder des Verbrennungsmotors (1) zugeführt wird, wobei zur Bestimmung des Abgasrückführmassenstroms ($dm_{AGR}$) des über die Abgasrückführung (16) zurückgeführten Abgases eine von verschiedenen Betriebsparametern des Verbrennungsmotors (1) abhängige Kennlinie des Zylindermassenstroms ($dm_{zyl}$) des dem mindestens einen Zylinder des Verbrennungsmotors (1) zugeführten Gasgemisches ermittelt und der Frischluftmassenstrom ($dm_{HFM}$) der Frischluft gemessen wird, wobei die Kennlinie des Zylindermassenstroms ($dm_{zyl}$) an den für verschiedene Betriebspunkte des Verbrennungsmotors (1) bekannten Frischluftmassenstrom ($dm_{HFM}$) angepasst wird, und wobei der Abgasrückführmassenstrom ($dm_{AGR}$) in Abhängigkeit von dem in einem jeweils augenblicklichen Betriebspunkt des Verbrennungsmotors (1) gemessenen Frischluftmassenstrom ($dm_{HFM}$) unter Verwendung der angepassten Kennlinie des Zylindermassenstroms ($dm_{zyl}$) bestimmt wird, **dadurch gekennzeichnet,**

**dass** die Kennlinie des Zylindermassenstroms ($dm_{zyl}$) durch ein Modell mit Koeffizienten modelliert und durch Adaption der Koeffizienten des Modells im laufenden Betrieb adaptiert wird.

2. Verfahren nach Anspruch 1, **dadurch gekennzeichnet, dass** die Kennlinie des Zylindermassenstroms derart an den für die verschiedenen Betriebspunkte des Verbrennungsmotors (1) bekannten Frischluftmassenstrom angepasst wird, dass für jeden dieser Betriebspunkte bei mindestens einem bekannten Abgasrückführmassenstrom wenigstens näherungsweise die Beziehung $dm_{AGR} = dm_{zyl} - dm_{HFM}$ gilt, wobei $dm_{AGR}$ den bekannten Abgasrückführmassenstrom, $dm_{zyl}$ den Zylindermassenstrom gemäß der angepassten Kennlinie und $dm_{HFM}$ den jeweils bekannten Frischluftmassenstrom bezeichnet.

3. Verfahren nach Anspruch 2, **dadurch gekennzeichnet, dass** die Kennlinie des Zylindermassenstroms derart an den für die verschiedenen Betriebspunkte des Verbrennungsmotors (1) bekannten Frischluftmassenstrom angepasst wird, dass für jeden dieser Betriebspunkte bei einem bekannten Abgasrückführmassenstrom von Null näherungsweise die Beziehung $dm_{zyl} = dm_{HFM}$ gilt.

4. Verfahren nach einem der vorhergehenden Ansprüche, **dadurch gekennzeichnet, dass** aus dem jeweils gemäß dem Verfahren bestimmten Abgasrückführmassenstrom ($dm_{AGR}$) und dem jeweils gemessenen Frischluftmassenstrom ($dm_{HFM}$) durch Quotientenbildung die Abgasrückführrate des über die Abgasrückführung (16) zurückgeführten Abgases ermittelt wird.

5. Verfahren nach einem der vorhergehenden Ansprüche, **dadurch gekennzeichnet, dass** der Abgasrückführmassenstrom in jedem Betriebspunkt des Verbrennungsmotors (1) aus der angepassten Kennlinie für den Zylindermassenstrom und dem jeweils in diesem Betriebspunkt gemessenen Frischluftmassenstrom gemäß der Beziehung $dm_{AGR} = dm_{zyl} - dm_{HFM}$ bestimmt wird, wobei $dm_{AGR}$ den zu bestimmenden Abgasrückführmassenstrom, $dm_{zyl}$ den Zylindermassenstrom gemäß der angepassten Kennlinie und $dm_{HFM}$ den jeweils gemessenen Frischluftmassenstrom bezeichnet.

6. Vorrichtung zur Bestimmung des Abgasrückführmassenstroms eines Verbrennungsmotors,
wobei Frischluft mit einem über eine Abgasrückführung (16) zurückgeführten Abgas des Verbrennungsmotors (1) gemischt und das daraus resultierende Gasgemisch mindestens einem Zylinder des Verbrennungsmotors (1) zuzuführen ist,
mit Frischluftmassenstrom-Messmitteln (6) zum Messen des Frischluftmassenstroms ($dm_{HFM}$) der Frischluft, und mit Abgasrückführmassenstrom-Bestimmungsmitteln (4) zur Bestimmung des Abgasrückführmassenstroms ($dm_{AGR}$) des über die Abgasrückführung (16) zurückgeführten Abgases, wobei die Abgasrückführmassenstrom-Bestimmungsmittel (4) derart ausgestaltet sind, dass sie den Abgasrückführmassenstrom anhand einer von verschiedenen Betriebsparametern des Verbrennungsmotors (1) abhängigen Kennlinie des Zylindermassenstroms ($dm_{zyl}$) des dem mindestens einen Zylinder des Verbrennungsmotors (1) zugeführten Gasgemisches und anhand des von den Frischluftmassenstrom-Messmitteln (6) gemessenen Frischluftmassenstroms ($dm_{HFM}$) bestimmen, wobei die Abgasrückführmassenstrom-Bestimmungsmittel (4) derart ausgestaltet sind, dass sie die Kennlinie des Zylindermassenstroms ($dm_{zyl}$) an den für verschiedene Betriebspunkte des Verbrennungsmotors (1) bekannten Frischluftmassenstrom ($dm_{HFM}$) anpassen und den Abgasrückführmassenstrom ($dm_{AGR}$) in Abhängigkeit von dem in einem jeweils augenblicklichen Betriebspunkt des Verbrennungsmotors (1) gemessenen Frischluftmassenstrom ($dm_{HFM}$) unter Verwendung der angepassten Kennlinie des Zylindermassenstroms ($dm_{zyl}$) bestimmen,
**dadurch gekennzeichnet,**
**dass** die Abgasrückführmassenstrom-Bestimmungsmittel (4) die Kennlinie des Zylindermassenstroms ($dm_{zyl}$) in Form eines Modells mit Koeffizienten speichern und ausgestaltet sind, um zum Anpassen der Kennlinie des Zylindermassenstroms ($dm_{zyl}$) die Koeffizienten des Modells im laufenden Betrieb zu adaptieren.

7. Vorrichtung nach Anspruch 6, **dadurch gekennzeichnet, dass** die Abgasrückführmassenstrom-Bestimmungsmittel (4) zur Durchführung des Verfahrens nach einem der Ansprüche 1-6 ausgestaltet sind.

**Claims**

1. Method for determining the exhaust-gas recirculation mass flow of an internal combustion engine,
with fresh air being mixed with exhaust gas, which is recirculated via an exhaust-gas recirculation system (16), of the internal combustion engine (1), and the resulting gas mixture being supplied to at least one cylinder of the internal combustion engine (1),

wherein, in order to determine the exhaust-gas recirculation mass flow ($dm_{EGR}$) of the exhaust gas which is recirculated via the exhaust-gas recirculation system (16), a characteristic curve, which is dependent on various operating parameters of the internal combustion engine (1), of the cylinder mass flow ($dm_{cyl}$) of the gas mixture which is supplied to the at least one cylinder of the internal combustion engine (1) is determined and the fresh-air mass flow ($dm_{HFM}$) of the fresh air is measured,
with the characteristic curve of the cylinder mass flow ($dm_{cyl}$) being adapted to the fresh-air mass flow ($dm_{HFM}$) which is known for various operating points of the internal combustion engine (1), and
with the exhaust-gas recirculation mass flow ($dm_{EGR}$) being determined as a function of the fresh-air mass flow ($dm_{HFM}$), which is measured at an in each case present operating point of the internal combustion engine (1), using the adapted characteristic curve of the cylinder mass flow ($dm_{cyl}$),
**characterized**
**in that** the characteristic curve of the cylinder mass flow ($dm_{cyl}$) is modelled by means of a model having coefficients, and is adapted during ongoing operation by adaptation of the coefficients of the model.

2. Method according to Claim 1, **characterized in that** the characteristic curve of the cylinder mass flow is adapted to the fresh-air mass flow, which is known for the various operating points of the internal combustion engine (1), in such a way that the relationship $dm_{EGR} = dm_{cyl} - dm_{HFM}$ at least approximately applies for each of said operating points with at least one known exhaust-gas recirculation mass flow, with $dm_{EGR}$ denoting the known exhaust-gas recirculation mass flow, $dm_{cyl}$ denoting the cylinder mass flow according to the adapted characteristic curve, and $dm_{HFM}$ denoting the in each case known fresh-air mass flow.

3. Method according to Claim 2, **characterized in that** the characteristic curve of the cylinder mass flow is adapted to the fresh-air mass flow, which is known for the various operating points of the internal combustion engine (1), in such a way that the relationship $dm_{cyl} = dm_{HFM}$ approximately applies for each of said operating points with a known exhaust-gas recirculation mass flow of zero.

4. Method according to one of the preceding claims, **characterized in that** the exhaust-gas recirculation rate of the exhaust gas which is recirculated via the exhaust-gas recirculation system (16) is determined, by forming quotients, from the exhaust-gas recirculation mass flow ($dm_{EGR}$) in each case determined according to the method and from the in each case measured fresh-air mass flow ($dm_{HFM}$).

5. Method according to one of the preceding claims, **characterized in that** the exhaust-gas recirculation mass flow is determined, at each operating point of the internal combustion engine (1), from the adapted characteristic curve for the cylinder mass flow and from the fresh-air mass flow measured in each case at said operating point according to the relationship $dm_{EGR} = dm_{cyl} - dm_{HFM}$, with $dm_{EGR}$ denoting the exhaust-gas recirculation mass flow to be determined, $dm_{cyl}$ denoting the cylinder mass flow according to the adapted characteristic curve, and $dm_{HFM}$ denoting the in each case measured fresh-air mass flow.

6. Device for determining the exhaust-gas recirculation mass flow of an internal combustion engine,
with fresh air being mixed with exhaust gas, which is recirculated via an exhaust-gas recirculation system (16), of the internal combustion engine (1), and the resulting gas mixture being intended for supply to at least one cylinder of the internal combustion engine (1),
having fresh-air mass flow measuring means (6) for measuring the fresh-air mass flow ($dm_{HFM}$) of the fresh air, and having exhaust-gas recirculation mass flow determining means (4) for determining the exhaust-gas recirculation mass flow ($dm_{EGR}$) of the exhaust gas which is recirculated via the exhaust-gas recirculation system (16), with the exhaust-gas recirculation mass flow determining means (4) being designed so as to determine the exhaust-gas recirculation mass flow on the basis of a characteristic curve, which is dependent on various operating parameters of the internal combustion engine (1), of the cylinder mass flow ($dm_{cyl}$) of the gas mixture which is supplied to the at least one cylinder of the internal combustion engine (1) and on the basis of the fresh-air mass flow ($dm_{HFM}$) which is measured by the fresh-air mass flow measuring means (6),
with the exhaust-gas recirculation mass flow determining means (4) being designed so as to adapt the characteristic curve of the cylinder mass flow ($dm_{cyl}$) to the fresh-air mass flow ($dm_{HFM}$) which is known for various operating points of the internal combustion engine (1) and to determine the exhaust-gas recirculation mass flow ($dm_{EGR}$) as a function of the fresh-air mass flow ($dm_{HFM}$), which is measured at an in each case present operating point of the internal combustion engine (1), using the adapted characteristic curve of the cylinder mass flow ($dm_{cyl}$),
**characterized**
**in that** the exhaust-gas recirculation mass flow determining means (4) store the characteristic curve of the cylinder mass flow ($dm_{cyl}$) in the form of a model having coefficients, and are designed so as to adapt the coefficients of the model, in order to adapt the characteristic curve of the cylinder mass flow ($dm_{cyl}$), during ongoing operation.

7. Device according to Claim 6, **characterized in that** the exhaust-gas recirculation mass flow determining means (4) are designed to carry out the method according to one of Claims 1 to 6.

**Revendications**

1. Procédé pour déterminer le débit du gaz d'échappement recirculé dans un moteur à combustion interne,
dans lequel de l'air frais est mélangé avec du gaz d'échappement du moteur à combustion interne (1) recirculé par le biais d'une recirculation de gaz d'échappement (16), et le mélange de gaz en résultant est acheminé à au moins un cylindre du moteur à combustion interne (1),
dans lequel, pour déterminer le débit du gaz d'échappement recirculé ($dm_{AGR}$) du gaz d'échappement recirculé par le biais de la recirculation de gaz d'échappement (16), on détermine une caractéristique du débit dans le cylindre ($dm_{zyl}$) du mélange de gaz acheminé à l'au moins un cylindre du moteur à combustion interne (1), qui dépend de différents paramètres de fonctionnement du moteur à combustion interne (1) et l'on mesure le débit d'air frais ($dm_{HFM}$) de l'air frais,
dans lequel la caractéristique du débit dans le cylindre ($dm_{zyl}$) est adaptée au débit d'air frais ($dm_{HFM}$) connu pour différents points de fonctionnement du moteur à combustion interne (1), et
dans lequel le débit du gaz d'échappement recirculé ($dm_{AGR}$) est déterminé en fonction du débit d'air frais ($dm_{HFM}$) mesuré à chaque point de fonctionnement instantané du moteur à combustion interne (1) en utilisant la caractéristique adaptée du débit dans le cylindre ($dm_{zyl}$),
**caractérisé en ce que**
la caractéristique du débit dans le cylindre ($dm_{zyl}$) est modélisée par un modèle avec des coefficients et est adaptée par adaptation des coefficients du modèle pendant un fonctionnement continu.

2. Procédé selon la revendication 1, **caractérisé en ce que** la caractéristique du débit dans le cylindre est adaptée au débit d'air frais connu pour les différents points de fonctionnement du moteur à combustion interne (1), **en ce que** pour chacun de ces points de fonctionnement, dans le cas d'au moins un débit de gaz d'échappement recirculé connu, on a au moins approximativement la relation $dm_{AGR} = dm_{zyl} - dm_{HFM}$, $dm_{AGR}$ désignant le débit de gaz d'échappement recirculé connu, $dm_{zyl}$ le débit dans le cylindre conformément à la caractéristique adaptée, et $dm_{HFM}$ le débit d'air frais connu dans chaque cas.

3. Procédé selon la revendication 2, **caractérisé en ce que** la caractéristique du débit dans le cylindre est adaptée au débit d'air frais connu pour les différents points de fonctionnement du moteur à combustion interne (1), **en ce que** pour chacun de ces points de fonctionnement dans le cas d'un débit de gaz d'échappement recirculé connu nul, on a approximativement la relation $dm_{zyl} = dm_{HFM}$.

4. Procédé selon l'une quelconque des revendications précédentes, **caractérisé en ce que** l'on détermine à partir du débit de gaz d'échappement recirculé ($dm_{AGR}$) déterminé à chaque fois selon le procédé,
et à partir du débit d'air frais respectivement mesuré ($dm_{HFM}$), par établissement d'un quotient, le taux de recirculation de gaz d'échappement du gaz d'échappement recirculé par le biais de la recirculation de gaz d'échappement (16).

5. Procédé selon l'une quelconque des revendications précédentes, **caractérisé en ce que** le débit de gaz d'échappement recirculé à chaque point de fonctionnement du moteur à combustion interne (1) est déterminé à partir de la caractéristique adaptée pour le débit dans le cylindre et du débit d'air frais mesuré dans ce point de fonctionnement, selon la relation $dm_{AGR} = dm_{zyl} - dm_{HFM}$, $dm_{AGR}$ désignant le débit de gaz d'échappement recirculé à déterminer, $dm_{zyl}$ le débit dans le cylindre conformément à la caractéristique adaptée, et $dm_{HFM}$ le débit d'air frais mesuré dans chaque cas.

6. Dispositif pour déterminer le débit de gaz d'échappement recirculé dans un moteur à combustion interne,
dans lequel de l'air frais est mélangé avec un gaz d'échappement du moteur à combustion interne (1) recirculé par le biais d'une recirculation de gaz d'échappement (16) et le mélange de gaz en résultant peut être acheminé au moins à un cylindre du moteur à combustion interne (1),
comprenant des moyens de mesure du débit d'air frais (6) pour la mesure du débit d'air frais ($dm_{HFM}$) de l'air frais, et avec des moyens de détermination du débit de gaz d'échappement recirculé (4) pour déterminer le débit de gaz d'échappement recirculé ($dm_{AGR}$) du gaz d'échappement recirculé par le biais de la recirculation de gaz d'échappement (16), les moyens de détermination du débit de gaz d'échappement recirculé (4) étant configurés de telle sorte qu'ils déterminent le débit de gaz d'échappement recirculé à l'aide d'une caractéristique du débit dans le cylindre ($dm_{zyl}$) du mélange de gaz acheminé à l'au moins un cylindre du moteur à combustion interne (1), qui dépend de différents paramètres de fonctionnement du moteur à combustion interne (1), et à l'aide d'un débit d'air frais ($dm_{HFM}$) mesuré par les moyens de mesure de débit d'air frais (6),

les moyens de détermination du débit de gaz d'échappement recirculé (4) étant configurés de telle sorte qu'ils adaptent la caractéristique du débit dans le cylindre ($dm_{zyl}$) au débit d'air frais ($dm_{HFM}$) connu pour différents points de fonctionnement du moteur à combustion interne (1) et qu'ils déterminent le débit de gaz d'échappement recirculé ($dm_{AGR}$) en fonction du débit d'air frais ($dm_{HFM}$) mesuré dans un point de fonctionnement instantané respectif du moteur à combustion interne (1) en utilisant la caractéristique adaptée du débit dans le cylindre ($dm_{zyl}$),

**caractérisé en ce que**

les moyens de détermination du débit de gaz d'échappement recirculé (4) mémorisent la caractéristique du débit dans le cylindre ($dm_{zyl}$) sous forme d'un modèle avec des coefficients et sont configurés, pour adapter la caractéristique du débit dans le cylindre ($dm_{zyl}$), pour adapter les coefficients du modèle en fonctionnement continu.

7. Dispositif selon la revendication 6, **caractérisé en ce que** les moyens de détermination du débit de gaz d'échappement recirculé (4) sont configurés pour mettre en oeuvre le procédé selon l'une quelconque des revendications 1 à 6.

FIG.

**EP 1 431 547 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19920498 A1